# EUROPÄISCHE PATENTSCHRIFT

(11) **EP 3 558 789 B1**
(45) Veröffentlichungstag und Bekanntmachung des Hinweises auf die Patenterteilung: **29.03.2023**
(21) Anmeldenummer: 18704496.1
(22) Anmeldetag: 05.02.2018
(51) Int. Cl.: B61L 27/00, B61L 15/00, B61L 27/70

(54) **AD-HOC-KOMMUNIKATIONSNETZWERK**
AD-HOC COMMUNIKATION NETWORK
RÉSEAU DE COMMUNICATION AD-HOC

(30) Priorität: 24.02.2017 DE 102017203040
(43) Veröffentlichungstag der Anmeldung: 30.10.2019
(73) Patentinhaber: Siemens Mobility GmbH, 81739 München (DE)
(72) Erfinder: BRO, Lars, 3650 Ølstykke (DK); VOSS, Mikael, 10117 Berlin (DE); BODE, Christian, 38118 Braunschweig (DE)
(74) Vertreter: Siemens Patent Attorneys
(86) Internationale Anmeldenummer: PCT/EP2018/052732
(87) Internationale Veröffentlichungsnummer: WO 2018/153640

(56) Entgegenhaltungen:
- EP-A1- 2 754 582
- EP-A1- 2 797 355
- WO-A2-2005/020602
- JP-A- 2000 016 292
- US-A1- 2004 230 345
- US-A1- 2008 095 134
- US-A1- 2011 075 641

## Beschreibung

Die vorliegende Erfindung betrifft ein System zur Gewährleistung einer kontinuierlichen Kommunikation in einem Ad-hoc-Netzwerk, insbesondere zwischen Zügen und fahrstreckenseitiger Infrastruktur.

Moderne Zugsteuerungssysteme basieren auf einer kontinuierlichen Kommunikation zwischen Zügen und einer fahrstreckenseitigen Infrastruktur. Diese Systeme nutzen die drahtlose Kommunikation, um eine kontinuierliche Kommunikationsverbindung zwischen Zügen und Strecke zu realisieren. Die Realisierung der drahtlosen Kommunikation basiert hier üblicherweise auf dem Netzwerkstandard IEEE 802.11 (Wireless LAN). In derartigen Systemen werden Zugangspunkte entlang der Bahnstrecke angeordnet. Diese Zugangspunkte sind mit einem fahrstreckenseitig verkabelten Netzwerk-Backbone, einer Kontroll- und Steuereinheit, verbunden, wobei mindestens ein redundantes Netzwerkkabel entlang des erforderlichen Gleises angeordnet ist, um die Kommunikation mit den relevanten fahrstreckenseitigen Kommunikationspartnern, zum Beispiel einem fahrstreckenseitige Zugsteuerungsrechner zu ermöglichen. In einem solchen Infrastrukturnetzwerk wird zwischen Zugangspunkten (englisch "Access Points"), die auch Basisstationen genannt werden und als Funkeinrichtungen entlang der Strecke ausgebildet sind, und "Stationen" (englisch "Stations") unterschieden, welche Funkeinrichtungen auf dem Zug sind.

Die Stationen, die Funkeinrichtungen auf dem Zug, hangeln sich während der Fahrt entlang der Fahrstrecke von Zugangspunkt zu Zugangspunkt. Dabei wird jeweils mindestens eine logische Verbindung bzw. ein logischer Link zwischen dem Zug und einem betreffenden fahrstreckenseitigen Zugangspunkt hergestellt. Es können mehrere Stationen mit einem Zugangspunkt logisch verbunden sein, jedoch kann eine Station immer nur mit genau einem Zugangspunkt entlang der Strecke verbunden sein. Zugangspunkte bauen in der Regel keine logischen Verbindungen zu anderen Zugangspunkten auf. Auch bauen Stationen in der Regel keine Verbindungen zu anderen Stationen auf. Eine logische Verbindung bedeutet hierbei, dass zum Beispiel eine zuggebundene Kommunikations- oder Funkeinrichtung zum Senden und Empfangen von Daten fest mit einem fahrstreckenseitigen Zugangspunkt verknüpft ist bzw. sie miteinander assoziiert sind. Dies bedeutet, dass möglicherweise andere Zugangspunkte des Netzwerks als die beiden Verbindungspartner ein versendetes Datenpaket ebenfalls empfangen können, das heißt es besteht gewissermaßen eine physische Verbindung. Diese empfangenen Datenpakete werden jedoch von den nicht assoziierten Zugangspunkten verworfen bzw. nicht weiter verarbeitet. Nur der logisch verbundene Zugangspunkt verarbeitet die versendeten Daten.

Während der Fahrt muss eine solche logische Verbindung mit den nachfolgenden Zugangspunkten entlang der Fahrstrecke immer wieder neu aufgebaut werden. Einen Wechsel der logischen Verbindung bzw. der Assoziierung von einem Zugangspunkt zum nächsten wird "Roaming" genannt. Diese Handover/Roaming-Verfahren sind bei hohen Geschwindigkeiten sehr schwierig durchzuführen, zum Beispiel aufgrund von Handshake-Latenzzeiten. Zusätzlich gibt es ein weiteres Problem bei der oben beschriebenen Anordnung: Die Roaming-Entscheidung basiert nur auf der Signalstärke eines Zugangspunktes und nicht darauf, ob über diesen Zugangspunkt eine erfolgreiche Kommunikation möglich ist. Somit ist es möglich, dass eine Verbindung zu einem defekten Zugangspunkt hergestellt wird. Die Folge wäre ein Kommunikationsverlust. Eine Kommunikation in den Infrastrukturnetzwerken des Standes der Technik ist nur mit einer solchen existierenden logischen Verbindung möglich. Daher ist dieser Ansatz fehleranfällig, zeitaufwendig und unflexibel.

Aus der Druckschrift WO 2005/020602 A2 ist ein System zum Roming in Zugangsbereichen von Daten- und/oder Kommunikationsnetzen für den Einsatz bei sich mit hoher Geschwindigkeit bewegenden Clients bekannt, bei dem entlang der Bewegungsstrecke der Clients Access Points zur Bereitstellung eines drahtlosen Zugangs zu Daten- und/oder Kommunikationsnetzen wie beispielsweise dem Internet angeordnet sind, wobei mindestens ein Access Point mittels einer Kommunikationsverbindung direkt mit dem Daten- und/oder Kommunikationsnetz verbunden ist, und Access Points ohne direkte Verbindung zum Daten- und/oder Kommunikationsnetz mittels Kommunikationsverbindungen an Access Points mit direkter Verbindung zum Daten- und/oder Kommunikationsnetz angeschlossen sind.

Andererseits sind Ad-hoc-Kommunikationsnetzwerke bestehend aus einer Vielzahl von Kommunikationseinrichtungen, genannt Knoten, bekannt. Bei einem Ad-hoc-Kommunikationsnetzwerk wird nicht zwischen Stationen auf dem Zug und Zugangspunkten an der Strecke unterschieden. Ein Knoten kann also sowohl eine zuggebundene als auch eine fahrstreckenseitige Funkeinrichtung sein. In einem Ad-hoc-Kommunikationsnetzwerk wird auf eine logische Verbindung zweier Knoten verzichtet. Jeder Knoten kann von einem anderen Knoten Daten empfangen.

Aus der Druckschrift US 2008/0095134 A1 ein drahtloses Ad-hoc-Netzwerk mit einer Straßennetzwerkeinheit und einer lokalen Peer Group bekannt. Die lokale Peer Group wird aus mehreren sich bewegenden Fahrzeugen gebildet. Die lokale Peer Group enthält einen Gruppenkopfknoten zum Verwalten der lokalen Peer Group. Der Gruppenkopfknoten wird aus einem der fahrenden Fahrzeuge gewählt. Die lokale Peer Group enthält ferner Gruppenknoten, die von den verbleibenden sich bewegenden Fahrzeugen in einem gegebenen Bereich bestimmt sind. Jedes der sich bewegenden Fahrzeuge, ob Gruppenkopfknoten oder Gruppenknoten, kommuniziert mit anderen unter Verwendung von Routing-Pfaden, die basierend auf einem ersten Steuerpaket, das vom Gruppenkopfknoten gesendet wird, und einem zweiten Steuerpaket, das von jedem der Gruppenknoten gesendet wird, erstellt wurden. Jedes sich bewegende Fahrzeug kommuniziert mit der Straßennetzwerkeinheit über Routing-Pfade, die auf der Grundlage eines von der Straßennetzwerkeinheit gesendeten Beacons und eines Antwortsignals von jedem der sich bewegenden Fahrzeuge erstellt wurden. Die Straßennetzwerkeinheit kann auch Glied der lokale Peer Group sein und als Gruppenknoten oder Gruppenkopfknoten fungieren.

Außerdem ist aus der Druckschrift US 2004/0230345 A1 ein Verfahren zu Kommunikation zwischen Elementen in einem hierarchisch schwimmenden Fahrzeugdatennetz bekannt. Dabei kommunizieren teilnehmende Fahrzeuge mit anderen teilnehmenden Fahrzeugen in einem Ad-hoc-Modus.

Jedoch existiert in Ad-hoc-Kommunikationsnetzwerken ein anderes Problem, das sogenannte "Hidden-Node-Problem". Bei dem Hidden-Node-Problem wird die gegenseitige Kollisionserkennung von zwei Kommunikationspartnern im Funkbereich mit einem gemeinsamen dritten Kommunikationspartner beeinträchtigt. Das Problem folgt daraus, dass der Datentransport in einem Funknetzwerk üblicherweise durch ein Kollisionsvermeidungsverfahren gesteuert werden muss. Ein Kollisionsvermeidungsverfahren des Standes der Technik ist das CSMA/CA Verfahren (Carrier Sense Multiple Access/Collision Avoidance). Dem Problem liegt zu Grunde, dass zwei Knoten des Netzwerks, die auf demselben Funkkanal arbeiten, nicht gleichzeitig eine Funkaussendung tätigen können, ohne dass die Information der Aussendungen durch Überlagerung der Funksignale verloren geht. Dies nennt man eine Kollision. Um zu vermeiden, dass zwei oder mehrere Knoten gleichzeitig senden, prüfen diese im Stand der Technik vor einer beabsichtigten Aussendung zunächst, ob bereits ein anderer Knoten sendet. Ist dies der Fall, wird ein zufälliges Zeitintervall gewartet und eine erneute Prüfung vorgenommen. Dieser Vorgang wird wiederholt, bis der Knoten erkennt, dass zu einem Zeitpunkt keine Aussendung eines anderen Knotens stattfindet. Dann erst beginnt der Knoten mit seiner Aussendung. Bei einem Hidden-Node-Problem sind mindestens drei Knoten A, B und C auf demselben Funkkanal beteiligt, wobei sich A und B sowie B und C jeweils mit ähnlicher Stärke gegenseitig empfangen können, jedoch A und C sich nicht empfangen können. In diesem Fall kann A nicht feststellen, ob C eine Aussendung vornimmt und umgekehrt. Beginnt A nun eine Aussendung an B, während C ebenfalls eine Aussendung an B vornimmt, entsteht eine Kollision. Im Bereich von B überlagern sich die beiden Signale und die Information beider Aussendungen geht verloren. Da sich A und C jedoch nicht empfangen können, haben beide Knoten keine Möglichkeit, die Kollision zu vermeiden. Das CSMA/CA-Verfahren ist in diesem Fall also nicht effektiv.

Es ist an dieser Stelle anzumerken, dass das Hidden-Node-Problem prinzipiell auch in einem Infrastrukturnetzwerk mit einem verkabelten Netzwerk-Backbone wie einleitend beschrieben auftreten kann. In einem solchen wird dieses Problem jedoch vor allem dadurch vermieden, dass sich kanalgleiche Funkbereiche der fahrstreckenseitigen Zugangspunkte nicht überlappen.

Die Aufgabe besteht nun darin, eine kontinuierliche Kommunikationsverbindung zwischen Zügen und fahrstreckenseitiger Infrastruktur unter Ausschluss der oben genannten Nachteile zu gewährleisten.

Ausgehend von einem Ad-hoc-Kommunikationsnetzwerk mit den Merkmalen des Oberbegriffs des Patentanspruches 1 (WO 2005/020602 A2) löst die Erfindung die Aufgabe durch die Merkmale im kennzeichnenden Teil des Patentanspruches 1, nämlich
- dass sowohl die fahrzeugseitige Funkeinrichtung als auch die fahrstreckenseitigen Funkeinrichtungen dazu eingerichtet sind, auf mindestens drei voneinander verschiedenen Kanälen bestehend aus einem ersten Funkkanal, einem zweiten Funkkanal und einem dritten Funkkanal zu kommunizieren,
- dass die fahrstreckenseitigen Funkeinrichtungen jeweils zwei Sende- und Empfangseinheiten und eine Empfangseinheit aufweisen, wobei die Empfangseinheit zum unidirektionalen Datenempfang von den jeweils direkt benachbarten fahrstreckenseitigen Funkeinrichtungen auf einem ersten der Kanäle ausgebildet ist, eine der zwei Sende- und Empfangseinheiten für die bidirektionale Kommunikation mit der in einer ersten Richtung entlang der Fahrstrecke übernächsten fahrstreckenseitigen Funkeinrichtung auf einem zweiten der Kanäle ausgebildet ist und die andere der zwei Sende- und Empfangseinheiten für die bidirektionale Kommunikation mit der in einer zweiten Richtung entlang der Fahrstrecke übernächsten fahrstreckenseitigen Funkeinrichtung auf einem dritten der Kanäle ausgebildet ist,
- und dass die Verwendung der drei verschiedenen Funkkanäle je fahrstreckenseitiger Funkeinrichtung entlang der Fahrstrecke in alternierender, sich wiederholender Reihenfolge erfolgt.

Ein der Erfindung zugrundeliegendes Ad-hoc-Kommunikationsnetzwerk besteht aus einer Anzahl von maschenartig verknüpften Knoten oder Funkeinrichtungen, die miteinander kommunizieren können.

Die Knoten des erfindungsgemäßen Ad-hoc-Kommunikationsnetzwerks werden durch die fahrzeugseitigen und die fahrstreckenseitigen Funkeinrichtungen gebildet.

In einem "vermaschten" oder "meshed-Netzwerk" ist nicht jede Funkeinrichtung des Netzwerks mit allen anderen Funkeinrichtungen des Netzwerks dauerhaft verbunden, jedoch ist jede Funkeinrichtung des Netzwerks mit zumindest einer weiteren Funkeinrichtung des Netzwerks verbunden. Es werden Nachrichten von einem Anfangsknoten zu einem Endknoten übertragen. Befindet sich der Endknoten außerhalb der Reichweite des Anfangsknotens, werden dazwischenliegende Knoten zur Weiterleitung der Nachricht eingesetzt. In Ad-hoc-Kommunikationsnetzwerken, die zwei oder mehr Objekte als Knoten zu einem vermaschten mobilen Netz verbinden, passt sich das Netzwerk beständig an, wenn sich Knoten bewegen, hinzukommen oder ausfallen.

Ein Vorteil der Erfindung ist, dass in drahtlosen Ad-hoc-Kommunikationsnetzwerken keine logischen Verbindungen notwendig sind und somit auch kein Roaming. In einem Ad-hoc-Kommunikationsnetzwerk können alle Knoten Daten von anderen Knoten empfangen. Eine konkrete Assoziierung besteht nicht. Die Knoten in einem Ad-hoc-Kommunikationsnetzwerk passen sich dabei an veränderte Gegebenheiten an, indem sie feststellen, welche Knoten zum aktuellen Zeitpunkt durch eine Funkaussendung erreichbar sind und treffen davon abhängig Entscheidungen zur Weiterleitung von Daten.

Außerdem wird in solchen Netzwerken nicht zwischen Zügen und Funkeinrichtungen entlang der Fahrstrecke unterschieden. Daten werden an alle Knoten im Funkbereich versandt. Diese Knoten übermitteln die Daten dann an einen oder mehrere weitere Knoten, die nicht im Funkbereich des Anfangsknotens liegen. Dieser Weiterleitungsschritt oder Verteilungsschritt von Daten wird wiederholt, bis die Daten ihren endgültigen Bestimmungsort erreicht haben. Anstelle der fahrstreckenseitigen Zugangspunkte werden sogenannte fahrstreckenseitige Funkeinrichtungen entlang der Strecke eingesetzt. Eine drahtgebundene Verbindung, wie zwischen den Zugangspunkten in bisherigen Systemen, ist bei den fahrstreckenseitigen Funkeinrichtungen nicht mehr notwendig.

In dem erfindungsgemäßen Ad-hoc-Kommunikationsnetzwerk wird auf eine kabelgebundene Kontroll- und Steuereinheit (Backbone) verzichtet. Die Kontroll- und Steuereinheit verfügt selbst über eine Funkeinrichtung und ist ein Knoten des Ad-hoc-Kommunikationsnetzwerks. Die Funkbereiche der Knoten des Ad-hoc-Kommunikationsnetzwerks, insbesondere der fahrstreckenseitigen Funkeinrichtungen, überlappen sich. Das Hidden-Node-Problem ist dabei also nicht Folge des Wechsels von einem Infrastrukturnetzwerk auf ein Ad-hoc-Kommunikationsnetzwerk an sich, sondern vielmehr Folge des fehlenden verkabelten Netzwerk-Backbones bei einem solchen.

In einer bevorzugten Ausführungsform handelt es sich bei der Strecke um ein Bahngleis. Das Fahrzeug ist bevorzugt ein Zug. Es wird erfindungsgemäß die Kommunikation eines Zuges mit Funkeinrichtungen entlang eines Bahngleises verbessert. In diesem Fall kann die fahrzeugseitige Funkeinrichtung in einem Zugsteuerungsrechner auf dem Zug integriert sein. Die Kontroll- und Steuereinheit kann ein Streckengerät sein, welches Informationen des Zuges oder für den Zug entlang seiner Fahrstrecke verwaltet.

Es sei darauf hingewiesen, dass fahrzeugseitige und fahrstreckenseitige Funkeinrichtungen funktionell miteinander vergleichbar und jeweils in der Lage sind, Daten auf die gleiche Weise weiterzuleiten.

Es ist festzuhalten, dass mehrere fahrstreckenseitige Funkeinrichtungen an der Kontroll- und Steuereinheit angeschlossen werden können, was zusätzliche Redundanz bietet.

Die Nutzung von Ad-hoc-Kommunikationsnetzwerken für die Zug-Strecke-Kommunikation (Train-to-Wayside-Kommunikation) und die mehrstufige Weiterleitung von Daten über Funk führen zu weitreichenden Verbesserungen gegenüber bisherigen Systemen.

Es ist kein Übertragungskabel mehr zum Verbinden von fahrstreckenseitigen Funkeinrichtungen erforderlich, das heißt, dass bisher benötigte Glasfaserkabel zum Verbinden der Zugangspunkte entlang der Strecke eingespart werden können. Zudem gibt es keine Geschwindigkeitsbegrenzung aufgrund von Roaming-Latenzzeiten mehr. Außerdem löst die Weiterleitung durch zugseitige Funkeinrichtungen das Verbindungsproblem, wenn ein Fahrzeug, zum Beispiel ein Zug, das Signal einer fahrstreckenseitigen Funkeinrichtung abschirmt, insbesondere beim Fahren auf elektronische Sicht mit kleinen Zugfolgezeiten (Moving Block Driving) im Tunnel.

Das Ad-hoc-Kommunikationsnetzwerk mit seiner Punkt-zu-Mehrpunkt-Kommunikation erhöht somit die Zuverlässigkeit des Systems erheblich.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung und mit den Zeichnungen näher erläutert werden. Es zeigen:
- Figur 1: die Netzwerktopologie für ein Zugsteuerungssystem als Stand der Technik,
- Figur 2: ein Ad-hoc-Kommunikationsnetzwerk in einem ersten, nicht beanspruchten Ausführungsbeispiel,
- Figur 3: ein Ad-hoc-Kommunikationsnetzwerk in einem zweiten, nicht beanspruchten Ausführungsbeispiel, und
- Figur 4: ein erfindungsgemäßes Ad-hoc-Kommunikationsnetzwerk in einem dritten Ausführungsbeispiel.

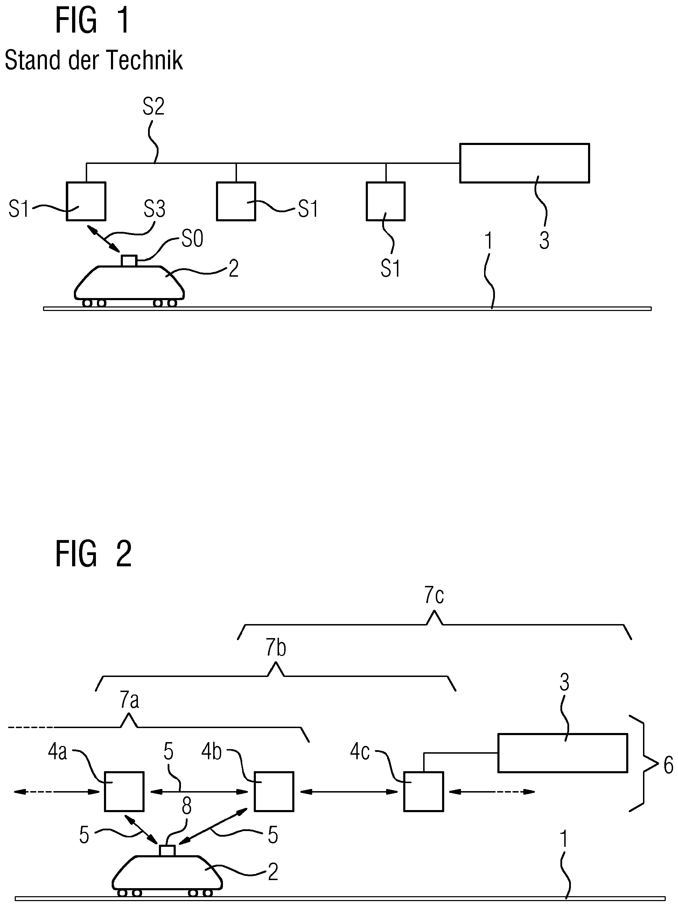

In der Figur 1 ist die Netzwerktopologie für ein Kommunikationsnetzwerk des Standes der Technik unter Einbeziehung eines Fahrzeugs 2, hier eines Zuges, gezeigt. In diesem System sind Zugangspunkte S1 entlang einer Fahrstrecke 1 des Fahrzeugs 2 angeordnet, die mit einem fahrstreckenseitig verkabelten Netzwerk-Backbone S2 verbunden sind, um die Kommunikation mit den relevanten fahrstreckenseitigen Kommunikationspartnern, zum Beispiel einem Zugsteuerungsrechner als Kontroll- und Steuereinheit 3, zu ermöglichen. Eine Kommunikationsverbindung zwischen dem sich bewegenden Fahrzeug 2 und einem Streckenzugangspunkt S1 muss immer wieder neu hergestellt werden. Dazu sind Handover/Roaming-Verfahren notwendig, die bei hohen Geschwindigkeiten des Fahrzeugs 2 sehr schwierig durchzuführen sind, zum Beispiel aufgrund von Handshake-Latenzzeiten. Ein solches System ist sehr fehleranfällig und die Kommunikation zeitaufwendig, vor allem weil sie immer nur über eine logische Verbindung S3 möglich ist. Es können auch mehrere logische Verbindungen S3 zwischen Fahrzeug 2 und der fahrstreckenseitigen Infrastruktur aus Gründen der Redundanz bestehen.

In der Figur 2 ist ein System zur Gewährleistung einer kontinuierlichen Kommunikationsverbindung in einem drahtlosen, nicht beanspruchten Ad-hoc-Kommunikationsnetzwerk zwischen sich entlang einer Strecke 1 fortbewegenden Fahrzeugen 2 und einer fahrstreckenseitigen Infrastruktur 6 in einer ersten Ausführungsform gezeigt. Die Strecke 1, zum Beispiel aber nicht beschränkend ein Bahngleis, ist für das Fortbewegen des Fahrzeugs 2, zum Beispiel einem Zug, eingerichtet, und das dargestellte Fahrzeug 2 ist dazu eingerichtet, sich entlang der Strecke 1 fortzubewegen. Mehrere Funkeinrichtungen 4a...c, 8 sind entlang der Strecke 1 und an dem Fahrzeug 2 angeordnet. Mindestens eine Kontroll- und Steuereinheit 3 zur kommunikationsbasierten Steuerung und Sicherung der Kommunikation mit oder vom dem Fahrzeug 2 ist mit mindestens einer fahrstreckenseitigen Funkeinrichtung 4a...c der fahrstreckenseitigen Infrastruktur 6 verbunden.

Im gezeigten Ausführungsbeispiel besteht die fahrstreckenseitige Funkeinrichtung 4a...c aus drei fahrstreckenseitigen Funkeinrichtungen 4a, 4b, 4c. Dabei kann beispielsweise jede fahrstreckenseitige Funkeinrichtung 4a, 4b, 4c mit allen anderen fahrstreckenseitigen Funkeinrichtungen 4a, 4b, 4c innerhalb ihres jeweiligen Funkbereichs 7a...c drahtlos kommunizieren. Dadurch kann beispielsweise die fahrstreckenseitige Funkeinrichtung 4b die von der fahrstreckenseitigen Funkeinrichtung 4a empfangenen Daten an die fahrstreckenseitige Funkeinrichtung 4c, welche nicht im Funkbereich 7a der ersten fahrstreckenseitigen Funkeinrichtung 4a liegt, übermitteln. Jede fahrstreckenseitige Funkeinrichtung 4a...c im Funkbereich 7a...c einer anderen fahrstreckenseitigen Funkeinrichtung 4a...c befindet sich in Funkreichweite dieser anderen fahrstreckenseitigen Funkeinrichtung 4a...c.

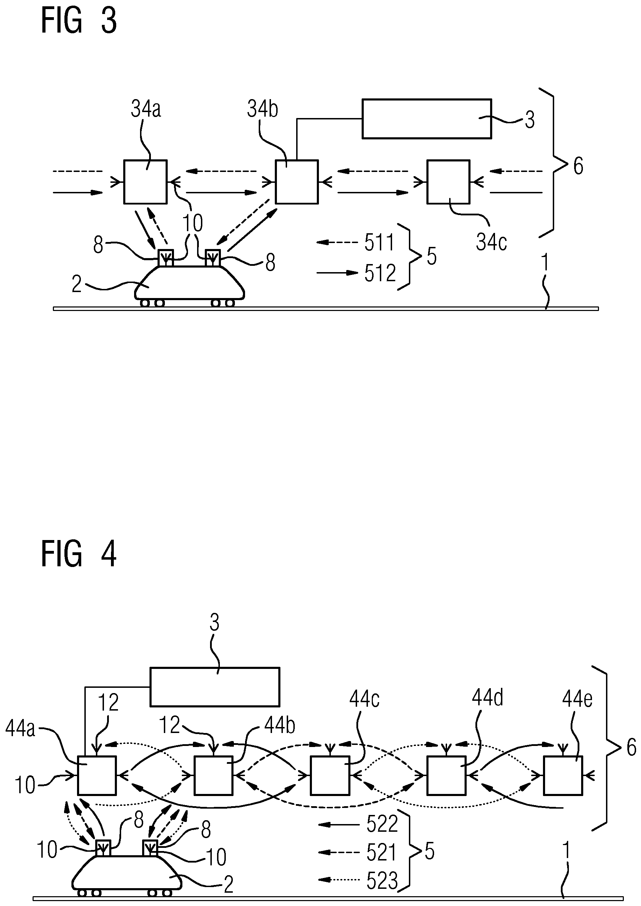

In der Figur 3 ist ein System zur Gewährleistung einer kontinuierlichen Kommunikationsverbindung in einem drahtlosen, nicht beanspruchten Ad-hoc-Kommunikationsnetzwerk zwischen sich entlang einer Strecke 1 fortbewegenden Fahrzeugen 2 und einer fahrstreckenseitigen Infrastruktur 6 in einer zweiten Ausführungsform gezeigt, wobei die mindestens eine Kontroll- und Steuereinheit 3 ein Zugsteuerungsrechner oder ein handelsüblicher Computer ist, welcher die kontinuierliche Kommunikationsverbindung basierend auf einem Weiterleitungsalgorithmus gewährleistet. Das Ad-hoc-Kommunikationsnetzwerk besteht hier aus der fahrzeugseitigen Funkeinrichtung 8, hier beispielsweise zwei fahrzeugseitige Funkeinrichtungen 8, und den fahrstreckenseitigen Funkeinrichtungen 34a...c bestehend aus drei fahrstreckenseitigen Funkeinrichtungen 34a, 34b und 34c. Die Kontroll- und Steuereinheit 3 kann kabelgebunden oder aber bevorzugt kabellos ebenfalls einen Knoten des Ad-hoc-Kommunikationsnetzwerks darstellen.

Es weisen die fahrstreckenseitigen Funkeinrichtungen 34a...c in dieser Ausführungsform für das Senden und Empfangen von Daten jeweils eine separat ausgerichtete Antenne bzw. Sende- und Empfangseinheit 10 auf. Die Kommunikation und Datenübertragung erfolgt für jede Richtung entlang der Strecke 1 über einen separaten Kanal 511 bzw. 512. In dem gezeigten Ausführungsbeispiel sendet der erste Kanal 511 von der zweiten fahrstreckenseitigen Funkeinrichtung 34b zur ersten fahrstreckenseitigen Funkeinrichtung 34a. Die dritte fahrstreckenseitige Funkeinrichtung 34c sendet auf diesem ersten Kanal 511 zur zweiten fahrstreckenseitigen Funkeinrichtung 34b. Der erste Kanal 511 sendet also in der Figur 3 von rechts nach links entlang der Fahrstrecke 1. Wie gezeigt wird der zweite Kanal 512 entsprechend zum Versenden von Daten von links nach rechts entlang der Fahrstrecke 1 in der Figur 3 eingesetzt, also zum Senden von der ersten fahrstreckenseitigen Funkeinrichtung 34a zur zweiten fahrstreckenseitigen Funkeinrichtung 34b und von der zweiten fahrstreckenseitigen Funkeinrichtung 34b zur dritten fahrstreckenseitigen Funkeinrichtung 34c und so weiter.

Zudem sind die fahrstreckenseitigen Funkeinrichtungen 34a...c hier wie in der Figur 2 so eingerichtet, dass ihr Funkbereich (hier nicht gezeigt) in jeder Richtung entlang der Strecke 1 mindestens bis zu der zweiten nachfolgenden Funkeinrichtung 34a...c reicht. Also reicht der Funkbereich der ersten fahrstreckenseitigen Funkeinrichtung 34a bis zur dritten fahrstreckenseitigen Funkeinrichtung 34c.

Das Hidden-Node Problem wird in diesem Ausführungsbeispiel einer Konfiguration mit zwei verschiedenen Kanälen 511, 512 dadurch gelöst, dass eine Aussendung von Daten über einen bestimmten der beiden Funkkanäle 511, 512 immer nur in eine physische Richtung erfolgt. Es kann zwar auch hier zu einer Überlagerung von Funksignalen kommen, wenn aus drei aufeinanderfolgenden fahrstreckenseitigen Funkeinrichtungen 34a...c bestehend aus einer ersten fahrstreckenseitigen Funkeinrichtung 34a, einer zweiten fahrstreckenseitigen Funkeinrichtung 34b und einer dritten fahrstreckenseitigen Funkeinrichtung 34c, zur gleichen Zeit die erste fahrstreckenseitige Funkeinrichtung 34a und die zweite fahrstreckenseitige Funkeinrichtung 34b in Richtung der dritten fahrstreckenseitigen Funkeinrichtung 34c senden. Jedoch ist die Differenz der Feldstärken der beiden Signale an der dritten fahrstreckenseitigen Funkeinrichtung 34c aufgrund der zunehmenden Entfernung groß genug, so dass die Information der Aussendung von der zweiten fahrstreckenseitigen Funkeinrichtung 34b erhalten bleibt. Der Abstand der fahrstreckenseitigen Funkeinrichtungen 34a...c und die Sendeleistung ist daher so zu bemessen, dass eine Aussendung von der ersten fahrstreckenseitigen Funkeinrichtung 34a an die zweite, benachbarte fahrstreckenseitige Funkeinrichtung 34b empfangen werden kann, aber eine Aussendung von der zweiten fahrstreckenseitigen Funkeinrichtung 34b an die dritte, der zweiten benachbarte fahrstreckenseitige Funkeinrichtung 34c nicht wesentlich beeinflusst.

In der Figur 4 ist ein erfindungsgemäßes System zur Gewährleistung einer kontinuierlichen Kommunikationsverbindung in einem drahtlosen Ad-hoc-Kommunikationsnetzwerk zwischen einem sich entlang einer Strecke 1 fortbewegendem Fahrzeug 2 und einer fahrstreckenseitigen Infrastruktur 6 in einer dritten Ausführungsform gezeigt. Die fahrstreckenseitigen Funkeinrichtungen 44a...e bestehen beispielhaft aus fünf fahrstreckenseitigen Funkeinrichtungen 44a, 44b, 44c, 44d und 44e. Jede fahrstreckenseitige Funkeinrichtung 44a, 44b, 44c, 44d, 44e weist in diesem Ausführungsbeispiel zwei Sende- und Empfangseinheiten 10 für eine bidirektionale Kommunikation mit der jeweils zweiten nachfolgenden Funkeinrichtung 44a...e auf sowie eine Empfangseinheit 12 zum Empfang von Daten von den direkt benachbarten fahrstreckenseitigen Funkeinrichtungen 44a...e. Die Kommunikation und Datenübertragung erfolgt in diesem Ausführungsbeispiel über drei verschiedene Funkkanäle 521, 522, 523 in einem räumlich alternierenden Muster.

Eine erste fahrstreckenseitige Funkeinrichtung 44a ist dazu eingerichtet, Daten von ihren beiden direkt benachbarten fahrstreckenseitigen Funkeinrichtungen 44a...e über den dritten Kanal 523 mittels ihrer Empfangseinheit 12 zu empfangen. Eine zweite fahrstreckenseitige Funkeinrichtung 44b, die direkt benachbart in einer ersten Richtung zur ersten fahrstreckenseitigen Funkeinrichtung 44a - in Figur 4 der rechte Nachbar - entlang der Fahrstrecke 1 angeordnet ist, ist ferner dazu eingerichtet, Daten von ihren beiden direkt benachbarten fahrstreckenseitigen Funkeinrichtungen 44a, 44c über den zweiten Kanal 522 mittels ihrer Empfangseinheit 12 zu empfangen. Eine dritte fahrstreckenseitige Funkeinrichtung 44c, die in der ersten Richtung direkt benachbart zur zweiten fahrstreckenseitigen Funkeinrichtung 44b - in Figur 4 wiederum der rechte Nachbar - entlang der Fahrstrecke 1 angeordnet ist, ist dazu eingerichtet, Daten von ihren beiden direkt benachbarten Funkeinrichtungen 44b, 44d über den ersten Kanal 521 mittels ihrer Empfangseinheit 12 zu empfangen.

Daten werden also erfindungsgemäß unidirektional entlang der Fahrstrecke 1 in einem sich wiederholenden Muster von sich abwechselnden, verschiedenen Funkkanälen 5 übertragen. Mit anderen Worten wird entlang der Fahrstrecke 1 unidirektional von einer fahrstreckenseitigen Funkeinrichtung 44a...e zur direkt benachbarten fahrstreckenseitigen Funkeinrichtung 44a...e alternierend auf verschiedenen Funkkanälen gesendet, Modulo der Anzahl der verwendeten verschiedenen Funkkanäle. Die Reihenfolge der alternierenden Funkkanäle wiederholt sich also entsprechend der Anzahl der Funkkanäle. Die Reihenfolge des unidirektionalen Sendens in Figur 4 von links nach rechts ist wie gezeigt: dritter Kanal 523 (zur fahrstreckenseitigen Funkeinrichtung 44a), zweiter Kanal 522 (zu 44b), erster Kanal 521 (zu 44c), dritter Kanal 523 (zu 44d), zweiter Kanal 522 (zu 44e) und so weiter.

Jede fahrstreckenseitige Funkeinrichtung 44a...e ist erfindungsgemäß dazu eingerichtet, auf einem ersten Kanal unidirektional zu empfangen, auf einem zweiten, vom ersten Kanal verschiedenen Kanal bidirektional in eine erste Richtung entlang der Fahrstrecke 1 zu kommunizieren und auf einem dritten, vom ersten und zweiten Kanal verschiedenen Kanal bidirektional in eine zweite, von der ersten Richtung verschiedene Richtung entlang der Fahrstrecke 1 zu kommunizieren.

Im gezeigten Beispiel der Figur 4 kommuniziert die dritte fahrstreckenseitige Funkeinrichtung 44c mit ihrem übernächsten rechten Nachbarn 44e bidirektional auf dem dritten Kanal 523. Ferner kommuniziert sie mit dem übernächsten linken Nachbarn 44a bidirektional auf dem zweiten Kanal 522 und empfängt von ihrem linken und rechten direkten Nachbar unidirektional über dem ersten Kanal 521.

Die zweite fahrstreckenseitige Funkeinrichtung 44b kommuniziert mit ihrem übernächsten rechten Nachbarn 44d bidirektional auf dem ersten Kanal 521 und kommuniziert mit dem übernächsten linken Nachbarn bidirektional auf dem dritten Kanal 523.

Die vierte fahrstreckenseitige Funkeinrichtung 44d kommuniziert mit ihrem übernächsten rechten Nachbarn bidirektional auf dem zweiten Kanal 522 und kommuniziert mit dem übernächsten linken Nachbarn 44b bidirektional auf dem ersten Kanal 521.

Mit anderen Worten, jede fahrstreckenseitige Funkeinrichtung 44a...e empfängt Daten von ihren direkt benachbarten fahrstreckenseitige Funkeinrichtungen 44a...e auf einem ersten Kanal, kommuniziert bidirektional mit ihrem übernächsten Nachbarn in einer ersten Richtung entlang der Fahrstrecke 1 auf einem zweiten, verschiedenen Kanal und kommuniziert mit ihrem übernächsten Nachbarn in einer zweiten, der ersten Richtung entgegengesetzten Richtung auf einem dritten, vom ersten und zweiten Kanal verschiedenen Kanal.

In dieser Mehrkanal-Konfiguration verwenden drei benachbarte fahrstreckenseitige Funkeinrichtungen bestehend aus einer ersten fahrstreckenseitigen Funkeinrichtung 44a, einer zweiten fahrstreckenseitigen Funkeinrichtung 44b und einer dritten fahrstreckenseitigen Funkeinrichtung 44c einen zweiten Funkkanal 522, wobei nur die erste fahrstreckenseitige Funkeinrichtung 44a und die dritte fahrstreckenseitige Funkeinrichtung 44c Aussendungen von Daten auf diesem Kanal vornehmen, während die zweite fahrstreckenseitige Funkeinrichtung 44b auf diesem Kanal ausschließlich empfängt. Da in dieser Anordnung nur zwei fahrstreckenseitige Funkeinrichtungen 44a...e das Senden von Daten vornehmen, kann das Hidden-Node-Problem innerhalb dieses Tripletts von fahrstreckenseitigen Funkeinrichtungen 44a, 44b, 44c nicht auftreten. Die darauf folgenden Triplets aus fahrstreckenseitigen Funkeinrichtungen 44b, 44c, 44d und 44c, 44d, 44e arbeiten nach dem gleichen Schema, verwenden jedoch jeweils einen anderen Funckanal 521, 523, so dass sie die zwei vorherigen und folgenden Tripletts aus fahrstreckenseitigen Funkeinrichtungen 44a...e nicht durch ihre Aussendung stören können. Bei drei unterschiedlichen Funkkanälen, verwendet das dann folgende Triplet 44d, 44e, 44f (nicht gezeigt) wieder denselben Funkkanal wie 44a, 44b, 44c. Eine Störung wird jedoch durch die Entfernung der Knoten zueinander und die damit abnehmende Signalstärke vermieden. Je mehr unterschiedliche Funkkanäle genutzt werden können, desto größer wird die Entfernung bis ein Funkkanal wiederverwendet wird. Es ist jede Anzahl an Funkkanälen größer oder gleich 3 möglich.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Ansprüche zu verlassen.

## Patentansprüche

1. Ad-hoc-Kommunikationsnetzwerk umfassend:
- mindestens eine mit einem Fahrzeug (2) verbundene fahrzeugseitige Funkeinrichtung (8) zur drahtlosen Kommunikation,
- eine Mehrzahl von an einer Fahrstrecke (1) des Fahrzeugs (2) installierten fahrstreckenseitigen Funkeinrichtungen (4a...c, 34a...c, 44a...e) zur drahtlosen Kommunikation,
- eine Kontroll- und Steuereinheit (3), welche mit mindestens einer der fahrstreckenseitigen Funkeinrichtungen (4a...c, 34a...c, 44a...e) zur Kommunikation verbunden ist, wobei
- die fahrstreckenseitigen Funkeinrichtungen (4a...c, 34a...c, 44a...e) eingerichtet sind, ohne logische Verbindung (S3) mit sich in Funkreichweite befindlichen anderen fahrstreckenseitigen Funkeinrichtungen (4a...c, 34a...c, 44a...e) sowie der fahrzeugseitigen Funkeinrichtung (8) drahtlos zu kommunizieren und empfangene Daten an sich in Funkreichweite befindliche andere fahrstreckenseitige Funkeinrichtungen (4a...c, 34a...c, 44a...e) weiterzuleiten, und
- die fahrstreckenseitigen Funkeinrichtungen (4a...c, 34a...c, 44a...e) derart angeordnet sind, dass sich in jeder Richtung entlang der Fahrstrecke (1) in Funkreichweite jeder der fahrstreckenseitigen Funkeinrichtungen (4a...c, 34a...c, 44a...e) mindestens zwei andere fahrstreckenseitige Funkeinrichtungen (4a...c, 34a...c, 44a...e) befinden, und
- die fahrstreckenseitigen Funkeinrichtungen (4a...c, 34a...c, 44a...e) derart ausgebildet sind, dass sie empfangene Daten an die nächste und die übernächste fahrstreckenseitigen Funkeinrichtungen (4a...c, 34a...c, 44a...e) in einer Richtung entlang der Fahrstrecke (1) übertragen
**dadurch gekennzeichnet,**
- **dass** sowohl die fahrzeugseitige Funkeinrichtung (8) als auch die fahrstreckenseitigen Funkeinrichtungen (44a, 44b, 44c, 44d, 44e) dazu eingerichtet sind, auf mindestens drei voneinander verschiedenen Kanälen (521, 522, 523) bestehend aus einem ersten Funkkanal (521), einem zweiten Funkkanal (522) und einem dritten Funkkanal (523) zu kommunizieren,
- **dass** die fahrstreckenseitigen Funkeinrichtungen (44a, 44b, 44c, 44d, 44e) jeweils zwei Sende- und Empfangseinheiten (10) und eine Empfangseinheit (12) aufweisen, wobei die Empfangseinheit (12) zum unidirektionalen Datenempfang von den jeweils direkt benachbarten fahrstreckenseitigen Funkeinrichtungen (44a, 44b, 44c, 44d, 44e) auf einem ersten der Kanäle (521, 522, 523) ausgebildet ist, eine der zwei Sende- und Empfangseinheiten (10) für die bidirektionale Kommunikation mit der in einer ersten Richtung entlang der Fahrstrecke (1) übernächsten fahrstreckenseitigen Funkeinrichtung (44a, 44b, 44c, 44d, 44e) auf einem zweiten, vom ersten Kanal verschiedenen Kanal ausgebildet ist und die andere der zwei Sende- und Empfangseinheiten (10) für die bidirektionale Kommunikation mit der in einer zweiten, von der ersten Richtung verschiedenen Richtung entlang der Fahrstrecke (1) übernächsten fahrstreckenseitigen Funkeinrichtung (44a, 44b, 44c, 44d, 44e) auf einem dritten, vom ersten und zweiten Kanal verschiedenen Kanal ausgebildet ist,
- und **dass** die Verwendung der drei verschiedenen Funkkanäle (521, 522, 523) je fahrstreckenseitiger Funkeinrichtung (44a, 44b, 44c, 44d, 44e) entlang der Fahrstrecke (1) in alternierender, sich wiederholender Reihenfolge erfolgt.

2. Ad-hoc-Kommunikationsnetzwerk nach Anspruch 1, wobei
- in einem ersten Triplett von benachbarten fahrstreckenseitigen Funkeinrichtungen (44a, 44b, 44c) bestehend aus einer ersten fahrstreckenseitigen Funkeinrichtung (44a), einer zweiten fahrstreckenseitigen Funkeinrichtung (44b) und einer dritten fahrstreckenseitigen Funkeinrichtung (44c), die drei benachbarten fahrstreckenseitigen Funkeinrichtungen (44a, 44b, 44c) gemeinsam den zweiten Funkkanal (522) verwenden, wobei nur die erste fahrstreckenseitige Funkeinrichtung (44a) und die dritte fahrstreckenseitige Funkeinrichtung (44c) des ersten Tripletts über den zweiten Funkkanal (522) zum Versenden von Daten eingerichtet ist, während die zweite fahrstreckenseitige Funkeinrichtung (44b) über den zweiten Funckanal (522) ausschließlich zum Empfangen von Daten eingerichtet ist, und
- in einem zweiten Triplett von benachbarten fahrstreckenseitigen Funkeinrichtungen (44b, 44c, 44d), welches dem ersten Triplett direkt nachfolgt und welches besteht aus der zweiten fahrstreckenseitigen Funkeinrichtung (44b), der dritten fahrstreckenseitigen Funkeinrichtung (44c) und einer vierten fahrstreckenseitigen Funkeinrichtung (44d), wobei die drei benachbarten fahrstreckenseitigen Funkeinrichtungen (44b, 44c, 44d) gemeinsam den ersten Funkkanal (521) verwenden, und wobei nur die zweite fahrstreckenseitige Funkeinrichtung (44b) und die vierte fahrstreckenseitige Funkeinrichtung (44d) des zweiten Tripletts über den ersten Funkkanal (521) zum Versenden von Daten eingerichtet sind, während die dritte fahrstreckenseitige Funkeinrichtung (44c) über den ersten Funkkanal (521) ausschließlich zum Empfangen von Daten eingerichtet ist, und
- in einem dritten Triplett von benachbarten fahrstreckenseitigen Funkeinrichtungen (44c, 44d, 44e), welches dem zweiten Triplett direkt nachfolgt und welches besteht aus der dritten fahrstreckenseitigen Funkeinrichtung (44c), der vierten fahrstreckenseitigen Funkeinrichtung (44d) und einer fünften fahrstreckenseitigen Funkeinrichtung (44e), wobei die drei benachbarten fahrstreckenseitigen Funkeinrichtungen (44c, 44d, 44e) gemeinsam den dritten Funkkanal (523) verwenden, und wobei nur die dritte fahrstreckenseitige Funkeinrichtung (44c) und die fünfte fahrstreckenseitige Funkeinrichtung (44e) des dritten Tripletts über den dritten Funkkanal (523) zum Versenden von Daten eingerichtet ist, während die vierte fahrstreckenseitige Funkeinrichtung (44d) über den dritten Funkkanal (523) ausschließlich zum Empfang von Daten eingerichtet ist.

3. Ad-hoc-Kommunikationsnetzwerk nach einem der Ansprüche 1 oder 2, wobei
- eine erste fahrstreckenseitige Funkeinrichtung (44a) dazu eingerichtet ist, Daten von ihren beiden direkt benachbarten fahrstreckenseitigen Funkeinrichtungen über den dritten Funkkanal (523) mittels ihrer Empfangseinheit (12) zu empfangen, und
- eine zweite fahrstreckenseitige Funkeinrichtung (44b), die direkt benachbart in der ersten Richtung zur ersten fahrstreckenseitigen Funkeinrichtung (44a) entlang der Fahrstrecke (1) angeordnet ist, dazu eingerichtet ist, Daten von ihren beiden direkt benachbarten fahrstreckenseitigen Funkeinrichtungen (44a, 44c) über den zweiten Funkkanal (522) mittels ihrer Empfangseinheit (12) zu empfangen, und
- eine dritte fahrstreckenseitige Funkeinrichtung (44c), die in der ersten Richtung direkt benachbart zur zweiten fahrstreckenseitigen Funkeinrichtung (44b) entlang der Fahrstrecke (1) angeordnet ist, dazu eingerichtet ist, Daten von ihren beiden direkt benachbarten Funkeinrichtungen (44b, 44d) über den ersten Funkkanal (521) mittels ihrer Empfangseinheit (12) zu empfangen.

4. Ad-hoc-Kommunikationsnetzwerk nach einem der vorhergehenden Ansprüche, wobei das mindestens eine Fahrzeug (2) ein Zug ist.

## Claims

1. Ad hoc communication network comprising:
- at least one piece of vehicle-side radio equipment (8) connected to a vehicle (2) for wireless communication,
- a plurality of pieces of track-side radio equipment (4a...c, 34a...c, 44a...e) installed on a route (1) of the vehicle (2) for wireless communication,
- a monitoring and control unit (3) which is connected to at least one of the pieces of track-side radio equipment (4a...c, 34a...c, 44a...e) for communication, wherein
- the track-side radio equipment (4a...c, 34a...c, 44a...e) is configured to communicate wirelessly without logical connection (S3) to other pieces of track-side radio equipment (4a...c, 34a...c, 44a...e) situated in radio range and to the vehicle-side radio equipment (8), and to forward received data to other track-side radio equipment (4a...c, 34a...c, 44a...e) situated in radio range, and
- the pieces of track-side radio equipment (4a...c, 34a...c, 44a...e) are arranged such that at least two other pieces of track-side radio equipment (4a...c, 34a...c, 44a...e) are situated in any direction along the route (1) in radio range of each of the pieces of track-side radio equipment (4a...c, 34a...c, 44a...e), and
- the pieces of track-side radio equipment (4a...c, 34a...c, 44a...e) are embodied such that they transfer received data to the next piece of track-side radio equipment and the piece of equipment after next (4a...c, 34a...c, 44a...e) in a direction along the route (1),
**characterised in that**
- both the piece of vehicle-side radio equipment (8) and the pieces of track-side radio equipment (44a, 44b, 44c, 44d, 44e) are configured to communicate on at least three channels (521, 522, 523) which are different from one another, consisting of a first radio channel (521), a second radio channel (522) and a third radio channel (523),
- the pieces of track-side radio equipment (44a, 44b, 44c, 44d, 44e) each have two transceiver units (10) and a receiver unit (12), wherein the receiver unit (12) is embodied for unidirectional data receipt from the directly adjacent pieces of track-side radio equipment (44a, 44b, 44c, 44d, 44e) in each case, on a first of the channels (521, 522, 523), one of the two transceiver units (10) is embodied for bidirectional communication with the piece of track-side radio equipment (44a, 44b, 44c, 44d, 44e) after next in the first direction along the route (1) on a second channel different from the first channel and the other of the two transceiver units (10) is embodied for bidirectional communication with the piece of track-side radio equipment (44a, 44b, 44c, 44d, 44e) after next in a second direction different from the first direction along the route (1) on a third channel different from the first and second channel,
- and the use of the three different radio channels (521, 522, 523) per piece of track-side radio equipment (44a, 44b, 44c, 44d, 44e) along the route (1) takes place in an alternating, repeating sequence.

2. Ad hoc communication network according to claim 1, wherein
- in a first triplet of adjacent pieces of track-side radio equipment (44a, 44b, 44c) consisting of a first piece of track-side radio equipment (44a), a second piece of track-side radio equipment (44b) and a third piece of track-side radio equipment (44c), the three adjacent pieces of track-side radio equipment (44a, 44b, 44c) together use the second radio channel (522), wherein only the first piece of track-side radio equipment (44a) and the third piece of track-side radio equipment (44c) of the first triplet are configured to send data via the second radio channel (522), while the second piece of track-side radio equipment (44b) is exclusively configured to receive data via the second radio channel (522), and
- in a second triplet of adjacent pieces of track-side radio equipment (44b, 44c, 44d), which directly follows the first triplet and which consists of the second piece of track-side radio equipment (44b), the third piece of track-side radio equipment (44c) and a fourth piece of track-side radio equipment (44d), wherein the three adjacent pieces of track-side radio equipment (44b, 44c, 44d) together use the first radio channel (521), and wherein only the second piece of track-side radio equipment (44b) and the fourth piece of track-side radio equipment (44d) of the second triplet are configured to send data via the first radio channel (521), while the third piece of track-side radio equipment (44c) is exclusively configured to receive data via the first radio channel (521), and
- in a third triplet of adjacent pieces of track-side radio equipment (44c, 44d, 44e), which directly follows the second triplet and which consists of the third piece of track-side radio equipment (44c), the fourth piece of track-side radio equipment (44d) and a fifth piece of track-side radio equipment (44e), wherein the three adjacent pieces of track-side radio equipment (44c, 44d, 44e) together use the third radio channel (523), and wherein only the third piece of track-side radio equipment (44c) and the fifth piece of track-side radio equipment (44e) of the third triplet are configured to send data via the third radio channel (523), while the fourth piece of track-side radio equipment (44d) is exclusively configured to receive data via the third radio channel (523).

3. Ad hoc communication network according to one of claims 1 or 2, wherein
- a first piece of track-side radio equipment (44a) is configured to receive data from its two directly adjacent pieces of track-side radio equipment via the third radio channel (523) by means of its receiving unit (12), and
- a second piece of track-side radio equipment (44b), which is arranged directly adjacent to the first piece of track-side radio equipment (44a) in the first direction along the route (1), is configured to receive data from its two directly adjacent pieces of track-side radio equipment (44a, 44c) via the second radio channel (522) by means of its receiver unit (12), and
- a third piece of track-side radio equipment (44c), which is arranged directly adjacent to the second piece of track-side radio equipment (44b) in the first direction along the route (1), is configured to receive data from its two directly adjacent pieces of radio equipment (44b, 44d) via the first radio channel (521) by means of its receiver unit (12).

4. Ad hoc communication network according to one of the preceding claims, wherein the at least one vehicle (2) is a train.

## Revendications

1. Réseau de communication ad-hoc comprenant :
- au moins un dispositif (8) radio embarqué de communication sans fil relié à un véhicule (2),
- une pluralité de dispositifs (4a...c, 34a...c, 44a...e) radio de communication sans fil sur la voie installés sur une voie (1) de circulation du véhicule (2),
- une unité (3) de contrôle et de commande, qui est reliée pour la communication à au moins l'un des dispositifs (4a...c, 34a...c, 44a...e) radio sur la voie, dans lequel
- les dispositifs (4a...c, 34a...c, 44a...e) radio sur la voie sont conçus pour communiquer sans fil sans liaison (S3) logique avec d'autres dispositifs (4a...c, 34a...c, 44a...e) radio sur la voie se trouvant dans la portée radio, ainsi qu'avec le dispositif (8) radio embarqué et pour acheminer des données reçues à d'autres dispositifs (4a...c, 34a...c, 44a...e) radio sur la voie se trouvant dans la portée, et
- les dispositifs (4a...c, 34a...c, 44a...e) radio sur la voie sont disposés de manière à ce qu'au moins deux autres dispositifs (4a...c, 34a...c, 44a...e) radio sur la voie se trouvent dans chaque sens le long de la voie (1) dans la portée de chacun des dispositifs (4a...c, 34a...c, 44a...e) radio sur la voie, et
- les dispositifs (4a...c, 34a...c, 44a...e) radio sur la voie sont constitués de manière à transmettre les données reçues au dispositif (4a...c, 34a...c, 44a...e) suivant immédiatement et venant immédiatement après celui-ci, dans un sens le long de la voie (1),
**caractérisé**
- **en ce que**, aussi bien le dispositif (8) radio embarqué, qu'également les dispositifs (44a, 44b, 44c, 44d, 44e) radio sur la voie sont conçus pour communiquer sur au moins trois canaux (521, 522, 523) différents les uns des autres constitués d'un premier canal (521) radio, d'un deuxième canal (522) radio et d'un troisième canal (523) radio,
- **en ce que** les dispositifs (44a, 44b, 44c, 44d, 44e) radio sur la voie ont chacun deux unités (10) d'émission et de réception et une unité (12) de réception, dans lequel l'unité (12) de réception est constituée pour la réception de données unidirectionnelle par les dispositifs (44a, 44b, 44c, 44d, 44e) radio sur la voie respectivement directement voisins sur un premier des canaux (521, 522, 523), l'une des deux unités (10) d'émission et de réception est conçue pour la communication bidirectionnelle avec le dispositif (44a,44b, 44c, 44d, 44e) radio sur la voie venant après le suivant dans un premier sens le long de la voie (1) sur un deuxième canal différent du premier canal et l'autre des deux unités (10) d'émission et de réception est conçue pour la communication bidirectionnelle avec le dispositif (44a, 44b, 44c, 44d, 44e) sur la voie venant après le suivant dans le sens différent du premier sens le long de la voie (1) sur un troisième canal différent du premier et du deuxième canal,
- et **en ce que** l'utilisation des trois canaux (521, 522, 523) radio différents s'effectue en succession alternée se répétant pour chaque dispositif (44a, 44b, 44c, 44d, 44e) radio sur la voie le long de la voie (1).

2. Réseau de communication ad-hoc suivant la revendication 1, dans lequel
- dans un premier triplet de dispositifs (44a, 44b, 44c) radio voisins sur la voie constitué d'un premier dispositif (44a) radio sur la voie, d'un deuxième dispositif (44b) radio sur la voie et d'un troisième dispositif (44c) radio sur la voie, les trois dispositifs (44a, 44b, 44c) radio voisins sur la voie utilisent conjointement le deuxième canal (522) radio, dans lequel seulement le premier dispositif (44a) radio sur la voie et le troisième dispositif (44c) radio sur la voie du premier triplet sont conçus pour l'envoi de données par le deuxième canal (522) radio, tandis que le deuxième dispositif (44b) radio sur la voie est conçu exclusivement pour la réception de données par le deuxième canal (522) radio, et
- dans un deuxième triplet de dispositifs (44b, 44c, 44d) radio voisins sur la voie, qui suit directement le premier triplet et qui est constitué du deuxième dispositif (44b) radio sur la voie, du troisième dispositif (44c) radio sur la voie et d'un quatrième dispositif (44d) radio sur la voie, dans lequel les trois dispositifs (44b, 44c, 44d) radio voisins sur la voie utilisent conjointement le premier canal (521) radio et dans lequel seulement le deuxième dispositif (44b) radio sur la voie et le quatrième dispositif (44d) radio sur la voie du deuxième triplet sont conçus pour l'envoi de données par le premier canal (521) radio, tandis que le troisième dispositif (44c) radio sur la voie est conçu exclusivement pour la réception de données par le premier canal (521) radio, et
- dans un troisième triplet de dispositifs (44c, 44d, 44e) radio voisins sur la voie, qui suit directement le deuxième triplet et qui est constitué du troisième dispositif (44c) radio sur la voie, du quatrième dispositif (44d) radio sur la voie et d'un cinquième dispositif (44e) radio sur la voie, les trois dispositifs (44c, 44d, 44e) radio voisins sur la voie utilisant conjointement le troisième canal (523) radio et dans lequel seulement le troisième dispositif (44c) radio sur la voie et le cinquième dispositif (44e) radio sur la voie du troisième triplet est conçu pour l'envoi de données par le troisième canal (523) radio, tandis que le quatrième dispositif (44d) radio sur la voie est conçu exclusivement pour la réception de données par le troisième canal (523) radio.

3. Réseau de communication ad-hoc suivant l'une des revendications 1 ou 2,
dans lequel
- un premier dispositif (44a) radio sur la voie est conçu pour recevoir, au moyen de son unité (12) de réception par le troisième canal (523) radio, des données de ses deux dispositifs radio sur la voie directement voisins, et
- un deuxième dispositif (44b) radio sur la voie, qui est le long de la voie (1) directement voisin dans le premier sens du premier dispositif (44a) radio sur la voie, est conçu pour recevoir, au moyen de son unité (12) de réception par le deuxième canal (522) radio, des données de ses deux dispositifs (44a, 44c) radio sur la voie directement voisins, et
- un troisième dispositif (44c) radio sur la voie, qui est le long de la voie (1) directement voisin dans le premier sens du deuxième dispositif (44b) radio sur la voie, est conçu pour recevoir, au moyen de son unité (12) de réception par le premier canal (521) radio, des données de ses deux dispositifs (44b, 44d) radio directement voisins.

4. Réseau de communication ad-hoc suivant l'une des revendications précédentes, dans lequel le au moins un véhicule (2) est un train.
